(19) Europäisches Patentamt
European Patent Office
Office européen des brevets

(11) **EP 1 613 876 B1**

(12) **EUROPÄISCHE PATENTSCHRIFT**

(45) Veröffentlichungstag und Bekanntmachung des Hinweises auf die Patenterteilung:
**25.05.2011 Patentblatt 2011/21**

(21) Anmeldenummer: **04727024.4**

(22) Anmeldetag: **13.04.2004**

(51) Int Cl.:
**F16F 15/32** *(2006.01)*

(86) Internationale Anmeldenummer:
**PCT/EP2004/050508**

(87) Internationale Veröffentlichungsnummer:
**WO 2004/090495 (21.10.2004 Gazette 2004/43)**

(54) **FAHRZEUGRÄDER-AUSWUCHTGEWICHT MIT KONKAV ODER KONVEX GEKRÜMMTER ANLAGESEITE SOWIE VERFAHREN ZU DESSEN HERSTELLUNG**

BALANCING WEIGHT FOR VEHICLE WHEELS, COMPRISING A CONCAVELY OR CONVEXLY CURVED CONTACT FACE, AND METHOD FOR THE PRODUCTION THEREOF

MASSELOTTE D'EQUILIBRAGE POUR ROUES DE VEHICULE COMPORTANT UNE FACE D'APPUI A COURBURE CONCAVE OU CONVEXE, ET SON PROCEDE DE PRODUCTION

(84) Benannte Vertragsstaaten:
**AT BE BG CH CY CZ DE DK EE ES FI FR GB GR HU IE IT LI LU MC NL PL PT RO SE SI SK TR**

(30) Priorität: **11.04.2003 EP 03100992**

(43) Veröffentlichungstag der Anmeldung:
**11.01.2006 Patentblatt 2006/02**

(73) Patentinhaber: **WEGMANN automotive GmbH & Co. KG**
**97207 Veitshöchheim (DE)**

(72) Erfinder: **WAGENSCHEIN, Dietmar**
**97076 Würzburg (DE)**

(74) Vertreter: **Götz, Georg Alois et al**
**Intellectual Property IP-GÖTZ**
**Patent- und Rechtsanwälte**
**Postfach 35 45**
**90017 Nürnberg (DE)**

(56) Entgegenhaltungen:
**EP-A- 1 248 014     EP-A- 1 327 795**
**WO-A-99/00609      DE-A- 10 102 321**
**GB-A- 1 097 394     US-A- 2 221 747**
**US-A- 4 300 803     US-A- 5 228 754**

• **PATENT ABSTRACTS OF JAPAN Bd. 2000, Nr. 23, 10. Februar 2001 (2001-02-10) & JP 2001 173723 A (HITACHI POWDERED METALS CO LTD), 26. Juni 2001 (2001-06-26)**

**Beschreibung**

Die Erfindung betrifft ein Auswuchtgewicht für Fahrzeug-Räder, mit einem Gewichtskörper, der eine konkav oder konvex gekrümmte Anlageseite zur Anlage an einen konvex bzw. konkav gekrümmten Felgenteil des Rads, insbesondere an ein Felgenhorn aufweist. Ferner betrifft die Erfindung ein Herstellungsverfahren für ein derartiges Auswuchtgewicht.

Bekannt sind Auswuchtgewichte aus Blei, das relativ weich und deshalb bei der Montage an eine Radfelge noch nachträglich plastisch verformt werden kann, um eine formschlüssige Anlage am Felgenhorn des Fahrzeugrads zu erreichen. Für die Montage von Auswuchtgewichten aus Blei spielen die Unterschiede zwischen verschiedenen Felgentypen (Alu-, Stahlfelgen) und Felgendesigns unterschiedlicher Fahrzeughersteller sowie die Unterschiede im Felgendurchmesser (13 Zoll bis 22 Zoll) keine nennenswerte Rolle, da Blei ein weicher Werkstoff ist und durch die relativ leichte, plastische Verformbarkeit dem jeweiligen Felgendurchmesser bzw. -radius angepasst werden kann. Infolgedessen mussten die Hersteller von Auswuchtgewichten bei der Geometriegebung für die Blei-Auswuchtgewichte den Felgendurchmesser nur insofern berücksichtigen, als man einen mittleren Wert dafür als Basis heranzog. Bei Felgen mit vom Mittelwert abweichendem Durchmesser ist eine nachträgliche Anpassung der Form des Blei-Auswuchtgewichts zwecks Montage am Fahrzeugrad möglich. Nun besteht aber aus mehreren Gründen ein beachtliches Bedürfnis, Blei als Werkstoff für Auswuchtgewichte zu vermeiden bzw. zu substituieren.

Als Substitutionswerkstoffe haben in jüngerer Zeit Stahl und Zink für Auswuchtgewichte Anwendung gefunden (vgl. z. B. Offenlegungsschrift DE 101 02 321 A1 der Anmelderin). Stahl und Zink sind allerdings wesentlich härter als Blei, so dass sie sich nachträglich nicht ohne weiteres durch Verformen oder dergleichen an unterschiedliche Felgendurchmesser anpassen lassen. Um diesem Problem zu begegnen, liegt es nahe, Auswuchtgewichte nur noch bis zu einer maximalen Länge bzw. maximalen Gewichtsgröße herzustellen und letztere nicht mehr zu überschreiten. Die Länge bzw. Gewichtsgröße wird bei dieser naheliegenden Alternative derart dimensioniert (z. B. Längen von 60-70 mm bzw. Gewichte bis ca. 40 g), dass die entsprechenden Gewichte auf allen Felgen problemlos montiert werden können. In der Praxis können jedoch Unwuchten von mehr als 40 g auftreten (Auswuchtgewichte mit 60 g sind heutzutage Standardl), so dass bei dieser Alternative zwei oder mehr Auswuchtgewichte montiert werden müssten, was zeitaufwendig und teuer ist. Eine andere, sich ohne weiteres anbietende Alternative, dem obigen Problem zu begegnen, besteht darin, für die unterschiedlichen Durchmesser möglichst aller im Handel befindlichen Radfelgen jeweils speziell zugeschnittene Auswuchtgewichte zu fertigen, wofür aber die Lagerhaltung und der Fertigungsaufwand zu teuer sind. Schließlich könnte man, um dem obigen Problem zu begegnen, noch ins Auge fassen, Auswuchtgewichte herzustellen, die auf der dem Felgenteil zugeordneten Anlageseite (Felgenrücken) auf der Basis eines Rücken-Krümmungsradiuses verlaufen, der so klein wie möglich bemessen ist und gerade noch einen praktikablen Einsatz erlaubt. Ein derartiges Auswuchtgewicht könnte auf allen gängigen Felgen montiert werden. Bei große Felgendurchmessern jedoch, entsteht der Nachteil, dass das Auswuchtgewicht an seinen Enden absteht und aufgrund einer geringen Anlagefläche im mittleren Bereich leicht vom Wuchtpunkt weg verschoben werden kann.

In der WO 99/00609 ist ein Auswuchtgewicht aus Glas, Porzellan oder Keramik offenbart, das verschiedene, in Richtung von der Felgenkante zur Felgenmitte hin aneinander angereihte Seitenabschnitte aufweist. Dieses Auswuchtgewicht kann beispielsweise mit einer Klemmfeder an der Felge befestigt werden oder mittels einer Klebeschicht an die Felge geklebt werden.

Der Erfindung liegt die Aufgabe zugrunde, ein Auswuchtgewicht zu schaffen, das sich ohne die Notwendigkeit einer plastischen Verformung bei der Montage für möglichst viele Felgentypen mit unterschiedlichsten Durchmessern einsetzen lässt. Für letztere soll gleichsam ein Universal-Auswuchtgewicht geschaffen werden. Zur Lösung wird auf das im Patentanspruch 1 angegebene Auswuchtgewicht sowie auf das im Patentanspruch 19 angegebene Herstellungsverfahren eines entsprechenden Auswuchtgewichts verwiesen. Optionale, vorteilhafte Ausgestaltungen der Erfindung ergeben sich aus den abhängigen Ansprüchen.

Mit der Erfindung wird der Weg der Substitution des umweltschädlichen Bleis durch Zink oder Stahl oder andere in den Ansprüchen genannte Materialien erleichtert, weil nun zur Anpassung an unterschiedliche Felgendurchmesser eine nachträgliche plastische Verformung des Auswuchtgewichts nicht mehr erforderlich ist.

Die Herstellbarkeit vereinfacht sich, wenn gemäß einer optionalen Erfindungsausbildung mindestens ein Seitenabschnitt, vorzugsweise mehrere oder alle gemäß kreisförmigen Kurven bzw. auf der Basis jeweils konstant bleibender Krümmungsradien verlaufen. Die Herstellung von Kreisformen mittels Werkzeugmaschinen ist einfach zu realisieren.

Gemäß einer optionalen Erfindungsausbildung ist es ausreichend, wenn für die Verläufe der Seitenabschnitte wenigstens zwei unterschiedlich bemessene Krümmungsradien verwendet sind. Beispielsweise könnte die Anlageseite in drei Abschnitte untergliedert sein, von denen der mittlere entsprechend dem größten Krümmungsradius und die beiden äußeren entsprechend einem einheitlich gleichen, kleineren Krümmungsradius verlaufen. Dabei können die beiden äußeren (End-) Seitenabschnitte bezüglich einer gedachten Symmetrielinie (den Gewichtskörper quer durchsetzend) paarweise gleich ausgeführt sein.

Im Rahmen der Erfindung liegen auch Krümmungsradien für einen oder mehrere oder alle der Seitenabschnitte, die wertmäßig jeweils gegen unendlich gehen, d. h., der betroffene Seitenabschnitt ist geradlinig. Geradlinige Verläufe der Seitenabschnitte können besonders zweckmäßig im mittleren Bereich der Anlageseite sein, um ausreichend an Felgenteile mit großem Durchmesser anliegen zu können.

Umgekehrt ist für Felgen mit kleinem Durchmesser eine optionale Erfindungsausbildung vorteilhaft, nach der zwei äußere Seitenabschnitte bzw. zwei Seiten-Endabschnitte von den vorkommenden Krümmungsradien mit den bzw. dem kleinsten versehen sind. Die solcherart verlaufenden Seiten-Endabschnitte ergeben dann mit der zugeordneten Felgenfläche den besten Formschluss, und andererseits hält sich der im mittleren Bereich zwischen Anlageseite und gegenüberliegender Felgenseite ergebende Spalt so in Grenzen, dass er ohne Überlastung von einer integrierten bzw. eingegossenen oder nachträglich angebrachten Haltefeder überbrückt werden kann.

Insbesondere wenn die bei der Anlageseite aufeinanderfolgenden Seitenabschnitte derart strukturiert sind, dass vom Seitenende bis zur Seitenmitte betragsmäßig zunehmende Krümmungsradien verwendet sind, und von der Seitenmitte bis zum anderen Seitenende betragsmäßig abnehmende Krümmungsradien verwendet sind, kann ein entsprechendes (Universal-) Auswuchtgewicht für nahezu alle Felgendurchmesser eingesetzt werden, ohne dass sich nennenswerte Montage- bzw. Haltbarkeitsprobleme ergeben.

Das Efindungskonzept ist jedoch nicht auf kreisförmige Verläufe der Seitenabschnitte (mit konstanter Krümmung bzw. konstantem Krümmungsradius) und/oder auf geradlinige/lineare Verläufe beschränkt. So können die Seitenabschnitte der Anlageseite mit sich über den Weg ändernden Krümmungen oder mit Krümmungen versehen sein, die entsprechend einer Parabel, Hyperbel und/oder Ellipse verlaufen.

Mit Vorteil werden die unterschiedlichen Krümmungsradien für die einzelnen Seitenabschnitte der Gewichtkörper-Anlageseite so gewählt, dass außen die kleinsten und innen der oder die größten Krümmungsradien vorherrschen. Die Größenverhältnisse zwischen den einzelnen Krümmungsradien werden vorteilhaft gemäß nachstehendem Schema gewählt, wobei n die Anzahl der Seitenabschnitte bedeutet. Dabei sind zwei Fälle A und B zu unterscheiden:

R1 liegt am linken (oder rechten) Ende der Anlageseite und Rn am rechten (oder linken) Ende der Anlageseite.

**Fall A: n = 4, 6, 8, ...**
130 mm < R1 < 330mm
R2 > R1
R3 >= R2
R4 >= R3
R5 >= R4

...
R(n/2) >= R(n/2-1)
R(n/2+1) <= R(n/2)
R(n/2+2) <= R(n/2+1)

...
R(n-1) <= R(n-2)
Rn < R(n-1)
130mm < Rn < 330mm
**Fall B: n = 3, 5, 7, ...**
130 mm < R1 < 330mm
R2 > R1
R3 >= R2
R4 >= R3
R5 >= R4

...
R((n+1)/2) >= R((n+1)/2-1)
R((n+1)/2+1) <= R((n+1)/2)
R((n+1)/2+2) <= R(n+1)/2+1)
...
R(n-1) <= R(n-2)
Rn < R(n-1)
130mm < Rn < 330mm

Die Obergrenze Rn für den Krümmungsradius kann sich im Falle von Lkws oder sonstigen Nutzfahrzeugen bis zu 600 mm erstrecken. Andererseits sind auch bei Kleinstrad-Anwendungen Krümmungsradien-Untergrenzen R1 bis zu 100 bis 120 mm denkbar.

Weitere Einzelheiten, Merkmale, Merkmalskombinationen und vorteilhafte Wirkungen auf der Basis der Erfindung ergeben sich aus der nachfolgenden Beschreibung bevorzugter Ausführungsformen der Erfindung sowie aus den Zeichnungen. Diese zeigen in:

Figur 1 und Figur 2 in unterschiedlichen, perspektivischen Ansichten ein an einem Felgenhorn befestigtes Schlag-Auswuchtgewicht,

Figur 3 eine perspektivische Ansicht auf ein efindungsgemäßes Auswuchtgewicht,

Figur 4a-4d vier Stirnansichten auf eine Radfelge mit daran befestigtem Schlag-Auswuchtgewicht zur Veranschaulichung der Wirkungsweise der Erfindung anhand eines Vergleichs der jeweiligen geometrischen Befestigungsverhältnisse des konventionellen Auswuchtgewichtes (Figur 4a, 4b) mit denen des erfindungsgemäßen Auswuchtgewichtes (4c, 4d), und

Figur 5 in schematischer Darstellung eine Draufsicht auf eine weitere Ausführungsform der Erfindung.

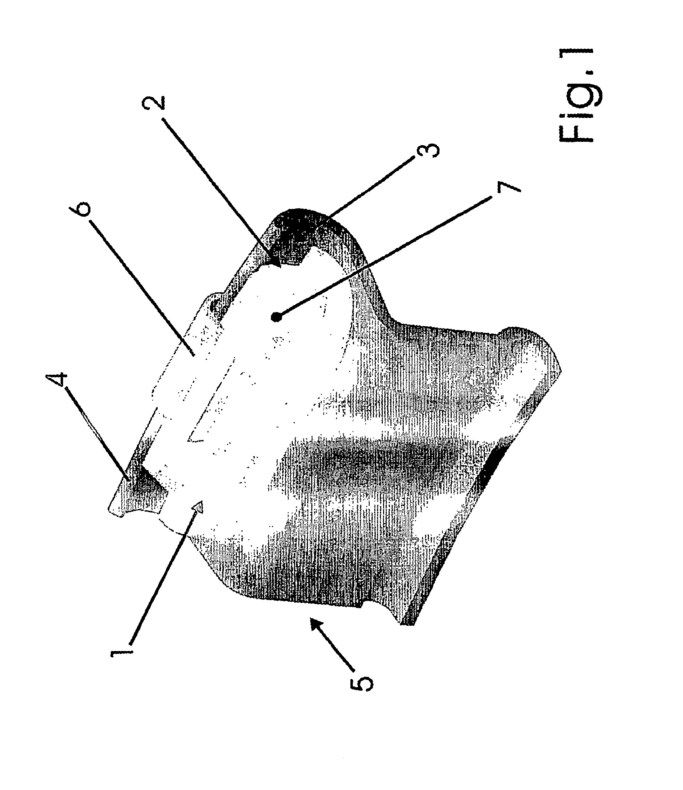

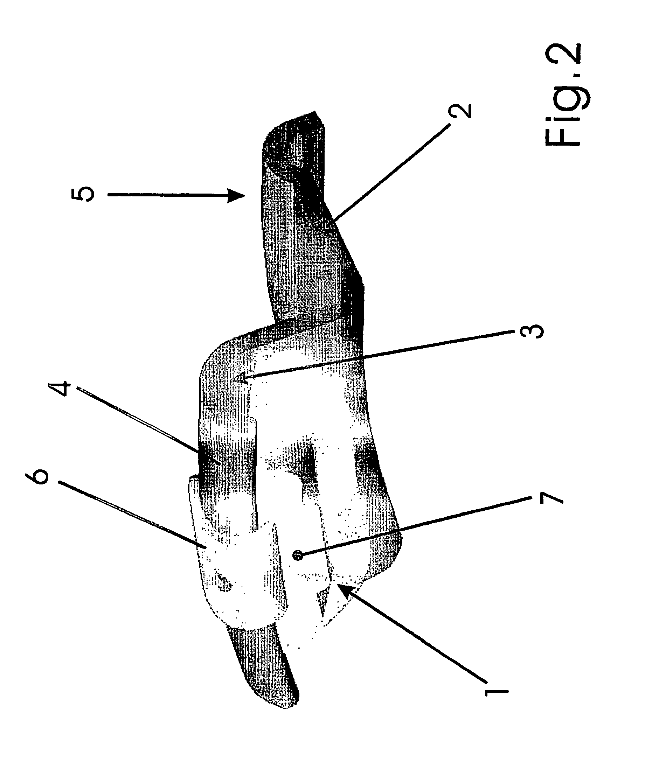

Gemäß Figuren 1 und 2 ist ein Schlag-Auswuchtgewicht 1 mit seiner rückwärtigen, konvexen Anlageseite 2 an der konkaven Innenseite 3 des Horns 4 einer Felge 5 (nur ausschnittsweise dargestellt) für Fahrzeugräder (Pkw, Lkw, Bus, Motorrad) befestigt. Als Befestigungsmittel dient eine Halte- bzw. Klammerfeder 6 beispielsweise aus gehärtetem Federstahl, die in den Gewichtskörper 7 eingegossen oder sonst wie integriert ist. Mit einem gebogenen Abschnitt ragt die Klammerfeder 6 aus dem Gewichtskörper 7 hervor und umgreift das Felgenhom 4. Die Kontur (Geometrie) des Auswuchtgewichts 1 mit der darin eingegossenen Klammerfeder 6 wird vom Hersteller festgelegt. Da es sehr viele unterschiedliche Felgen gibt, aber nicht für jede Felge ein eigener Gewichtstyp angefertigt werden soll (aus Gründen der Lagerhaltung, Variantenvielfalt und Kosten), ist für das Auswuchtgewicht 1 ein Geometrie anzustreben, welche die Montage auf möglichst vielen Felgen ermöglicht.

Als Werkzeug zur Montage des Schlag-Auswuchtgewichts 1 auf der Autofelge 5 ist der Einsatz eines Montagewerkzeugs bekannt, mittels welchem das Auswuchtgewicht 1 auf die Felge 5 aufgeschlagen wird. Dabei wird die Klammerfeder 6 mit ihrem aus dem Gewichtskörper 7 herausragenden, gebogenen Ende auf das Felgenhom 4 gesetzt und zum Aufschnappen mit dem Montagewerkzeug darübergeschlagen.

Nach der Montage soll das Auswuchtgewicht 1 am Felgenhom 4 möglichst unverrückbar anliegen. Dem dient eine konvexe Krümmung auf der Anlageseite 2 (Rückenseite), und die Krümmung soll einen Form- und/oder Kraftschluss mit der gegenüberliegenden, konkav gekrümmten Felgen-Innenseite 3 ermöglichten. Dazu muss die Anlage des Auswuchtgewichts 1 an der Felgen-Innenseite 3 über eine möglichst große Fläche erfolgen, um eine möglichst optimale Haltbarkeit und Unverrückbarkeit am Montagepunkt (von einer Wuchtmaschine ermittelter Punkt zur Kompensation der Unwucht) zu gewährleisten. Die kraftschlüssige Verbindung zwischen der Felge 5 und dem Auswuchtgewicht 1 wird über die Klammerfeder 6 hergestellt, die mit dem Gewichtskörper 7 mittels Eingießen formschlüssig verbunden ist und diesen durch Übergreifen und Umfassen des Felgenhorns 4 an der Felge 5 festklemmt.

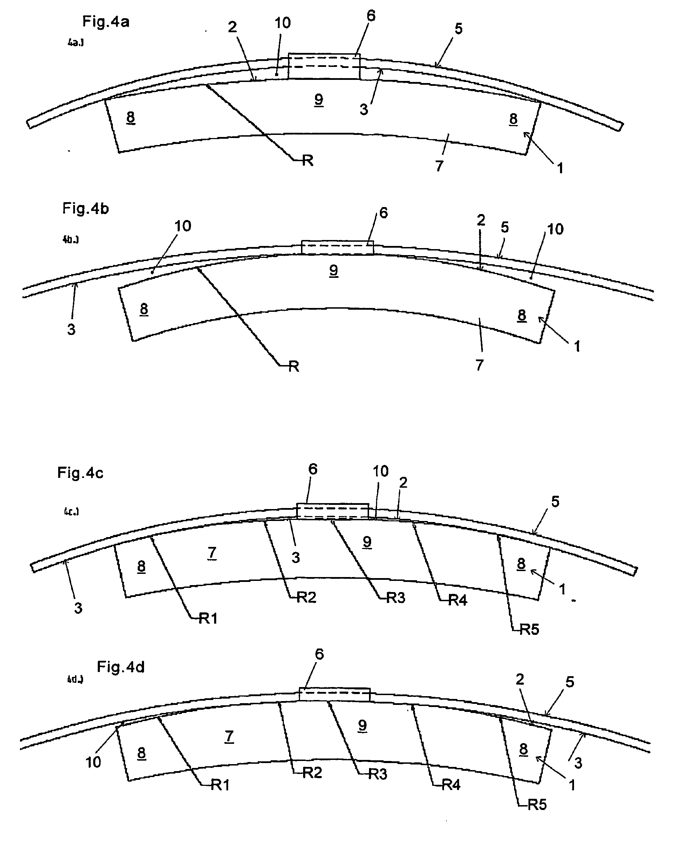

Hat nun das Auswuchtgewicht 1 eine konvexe, rückseitige Anlageseite 2 mit fest vorgegebenem Krümmungsradius, und die Felge 5 ebenfalls einen vorgegebenen Durchmesser (Radius), dann wird gemäß Figur 4a ein verhältnismäßig lang bemessenes Auswuchtgewicht 1 auf einer Felge 5 mit einem verhältnismäßig kleinen Durchmesser (z. B. 13 Zoll) nur in seinen Endbereichen 8 an der Felge 5 bzw. am Felgenhorn aufliegen. Dabei ergibt sich die Gefahr, dass (zunächst) die Klammerfeder 6 die Felge bzw. das Felgenhom nicht richtig umgreifen kann. Zur Abhilfe muss der Auswuchter den Gewichtskörper 7 insbesondere an seinen Endbereichen 8 verbiegen, indem er mit dem Montagewerkzeug den Gewichtskörper 7 in seinem Mittelbereich 9 leicht anschlägt, damit sich die im Vergleich zur konkaven Felgen-Innenseite 3 geringere Krümmung der Auswuchtgewicht-Anlageseite 2 entsprechend verändert und an die Innenkrümmung der Felgen-Innenseite 3 anpasst. Sodann kann die Klammerfeder 6 über die Felge 5 bzw. deren Felgenhom geschlagen werden. Dies ist bei aus Blei hergestellten und damit weichen Gewichtskörpern ohne weiteres möglich, ohne dass dabei die Felge 5 oder der Gewichtskörper 7 beschädigt werden.

Umgekehrt lässt sich gemäß Figur 4b bei relativ großen Felgendurchmessern (beispielsweise 18-22 Zoll), woraus eine relativ geringe Krümmung aufgrund des entsprechend großen Krümmungsradiuses resultiert, das Auswuchtgewicht 1 zwar relativ leicht montieren, was auf den kleineren Krümmungsradius R der Anlageseite 2 zurückgeht. Danach stehen aber die Endbereiche 8 von der Felge 5 ab, wobei zwischen beiden jeweils ein Spalt 10 entsteht (analog in Figur 4a im Mittelbereich 9). Gemäß Figur 4b berührt die Anlageseite 2 die Felge 5 infolgedessen nur im Mittelbereich 9. Dies hat einen entsprechend verminderten Kraftschluss zur Folge. Durch die abstehenden Endbereiche 8 kann zudem das Auswuchtgewichte 1 von beispielsweise Reinigungsbürsten einer Waschstrasse leicht verschoben werden, weil ein Kraftschluss nur im Mittelbereich 9 besteht. Zur Abhilfe kann man, sofern der Gewichtskörper 7 aus relativ weichem Blei hergestellt ist, die Endbereiche 8 mit einem Montagewerkzeug an die Felgen-Innenseite 3 leicht "anklopfen" (anpassen), was bei Werkstoff Blei aufgrund dessen Weichheit ohne Felgen- und Auswuchtgewicht-Beschädigung möglich ist.

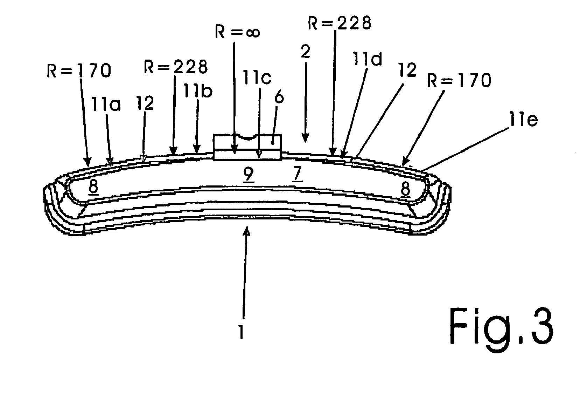

Das genannte Verbiegen bzw. "Anklopfen" funktioniert allerdings bei allen "harten" Werkstoffen wie insbesondere Zink und Stahl nicht mehr, welche zunehmend als bleifreie Alternativen für Auswuchtkörper verwendet werden. Zur Abhilfe wird gemäß Figur 3 für alle gängigen Felgendurchmesser erfindungsgemäß ein Universal-Auswuchtgewicht 1 geschaffen, dessen Anlageseite 2 sich durch eine Mehrzahl, im bezeichneten Beispiel durch fünf Seitenabschnitte 11a, 11b, 11c, 11d und 11e auszeichnet, die über stumpfwinklige Knicke 12 oder sonstige Unstetigkeitsstellen in Längsrichtung des Gewichtskörpers 7 aneinandergereiht sind. Die beiden äußeren Seitenabschnitte 11a, 11e verlaufen jeweils mit dem kleinsten Krümmungsradius R = 170 mm, während der mittlere Seitenabschnitt 11c im mittleren Bereich 9 geradlinig verläuft, d. h. einen Krümmungsradius R = ∞ aufweist Die Zwischen-Seitenabschnitte 11b, 11d, die jeweils zwischen dem mittleren Seitenabschnitt 11c und einem der beiden äußeren Seitenabschnitte 11a, 11b liegen, sind jeweils mit einem Krümmungsradius R = 228 mm versehen. Also nimmt vom äußeren Endbereich 8 Seitenabschnitt für Seitenabschnitt der jeweilige Krümmungsradius R bis zum Mittelbereich 9 stufenweise zu, um dann vom Mittelbereich 9 zum anderen Endbereich 8 hin wieder stufenweise abzunehmen.

Gemäß Figur 4c liegt bei Felgen 5 mit verhältnismäßig kleinem Durchmesser (etwa im Bereich 13 Zoll) ein Auswuchtgewicht 1, das relativ lang bzw. groß und 40-60 g schwer ist, mit seinen beiden Endbereichen 8 an der Felgeninnenseite 3 an. Beim Mittelbereich 9 verbleibt zwischen der Felgeninnenseite 3 und der Anlageseite 2 nur ein relativ kleiner Spalt 10, so dass die Klammerfeder ohne Gefahr einer Überlastung und Beschädigung über das Felgenhorn geschlagen werden kann. Dies ist auf die erfindungsgemäße Struktur zurückzuführen, wonach fünf Seitenabschnitte durch jeweils unterschiedliche Krümmungsradien R1, R2, R3, R4, R5 voneinander abgegrenzt sind. Dabei nehmen - analog zur Ausführung nach Figur 3 - die Krümmungsradien von beiden Endbereichen 8 ausgehend jeweils zum Mittelbereich 9 hin stufenweise zu. Mit anderen Worten, die Anlageseite 2 des erfindungsgemäßen Auswuchtgewichts ist in den beiden Endbereichen 8 stärker gekrümmt als im Mittelbereich 9.

In Figur 4d ist die Situation für Felgen 1 mit relativ großem Durchmesser (im Bereich um 20 Zoll) dargestellt. Die Felgeninnenseite 3 besitzt eine schwächere Krümmung bzw. einen größeren Krümmungsradius, als der größte Krümmungsradius R3 im mittleren Bereich 9 des erfindungsgemäßen Auswuchtgewichts 1. In dessen Endbereichen 8 ist die Anlageseite 2 mit noch stärker gekrümmten Seitenabschnitten gestaltet, so dass sich ein relativ kleiner Spalt 10 zwischen der Felgeninnenseite 3 und den Seitenabschnitten in den beiden Endbereichen 8 ergibt. Da im Mittelbereich 9 die Anlageseite 2 des Auswuchtgewichts 1 mit dem am wenigsten gekrümmten Seitenabschnitt, d. h. mit dem größten Krümmungsradius R3 gestaltet ist, kann dort das Auswuchtgewicht 1 mit einer relativ großen Länge von z. B. ca. 50 mm an der Felgen-Innenseite anliegen. Es entsteht ein entsprechend ausreichender Kraftschluss, welcher ein Verrutschen des Auswuchtgewichts 1 verhindert.

Man sieht also den Vorteil des erfindungsgemäßen Auswuchtgewichts 1, welches auf allen unterschiedlich großen Felgen montiert werden kann.

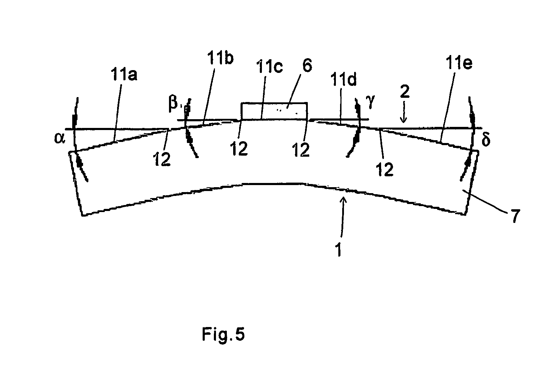

Die Erfindung ist nicht auf Ausführungen mit gekrümmten oder rundlichen Seitenabschnitten der Anlageseite des Auswuchtgewichts beschränkt. So kann gemäß Figur 5 die Anlageseite 2 fünf aufeinanderfolgende Seitenabschnitte 11a, 11b, 11c, 11d und 11e aufweisen, die alle linear bzw. geradlinig verlaufen. Zwischen diesen Seitenabschnitten befinden sich wiederum Knicke 12. Die Seitenabschnitte gehen über die Knicke 12 und jeweilige stumpfe Winkel ineinander über. Die beidseitig gedachten Verlängerungen des mittleren Seitenabschnitts 11c schließen mit den jeweils benachbarten Zwischen-Seitenabschnitten 11b, 11d jeweils die spitzen Winkel $\beta$, $\gamma$ ein. Die gedachten Verlängerungen der beiden Zwischenseitenabschnitte 11b, 11d schließen mit den jeweils benachbarten Endseitenabschnitten 11a, 11e die spitzen Winkel $\alpha$ bzw. $\delta$ ein. Dabei gilt die Beziehung:

$$\beta < \alpha \text{ und } \gamma < \delta$$

Das heißt, analog zu den oben zu den Endbereichen hin kleiner werdenden Krümmungsradien R nimmt bei der Ausführungsform nach Figur 5 die Abwinkelung vom mittleren Bereich 9 zu den Endbereichen hin zu. Dies ergibt wiederum die universelle Montierbarkeit des Auswuchtgewichts auf allen gängigen Felgen.

**Bezugszeichenliste**

| 1 | Schlag-Auswuchtgewicht |
|---|---|
| 2 | Anlageseite |
| 3 | Felgen-Innenseite |
| 4 | Hom |
| 5 | Rad-Felge |
| 6 | Klammerfeder |

| 7 | Gewichtskörper |
|---|---|
| 8 | Endbereich |
| 9 | Mittelbereich |
| 10 | Spalt |
| 11a-11d | Seitenabschnitte |
| 12 | Knick |
| R, R1-R5 | Krümmungsradien |
| α, β, δ, γ | spitze Winkel |

**Patentansprüche**

1. Auswuchtgewicht (1) für Fahrzeug-Räder, mit einem Gewichtskörper (7), der eine konkav oder konvex gekrümmte Anlageseite (2) zur Anlage an einen konvex beziehungsweise konkav gekrümmten Felgenteil (3,5) des Rads aufweist und mit einem Klemmelement (6) zur Befestigung des Gewichtskörpers an dem Felgenteil baulich integriert oder mit einer Haltefeder nachträglich versehen ist, wobei die Anlageseite (2) in mehrere aufeinander folgende Seitenabschnitte (11a, 11b, 11c, 11d, 11e) untergliedert ist, die durch Knicke (12) voneinander abgegrenzt sind, **dadurch** gekenntzeichnet, dass mindestens drei Seitenabschnitte (11a, 11b, 11c, 11d, 11e) zur Anlage an das Felgenteil ausgebildet und jeweils in Längsrichtung des Gewichtskörpers (7) über stumpfwinklige Knicke (12) aneinander gereiht sind.

2. Auswuchtgewicht nach dem Anspruch 1, **gekennzeichnet durch** eine Herstellung des Gewichtskörpers (7) aus oder mit Zink, Stahl, Kupfer, Messing, Wolfram, Gold, Silber und/oder einer Legierung mit einem oder mehreren der genannten Werkstoffe oder einem anderen Werkstoff oder Legierung, die jeweils härter als Blei sind, einschließlich Glas.

3. Auswuchtgewicht nach Anspruch 1 oder 2, **dadurch gekennzeichnet, dass** einer, mehrere oder alle der Seitenabschnitte (11a, 11b, 11c, 11d, 11e) gemäß kreisförmigen Kurven beziehungsweise mit jeweils konstanten Krümmungen verlaufen.

4. Auswuchtgewicht nach Anspruch 1, 2 oder 3, **dadurch gekennzeichnet, dass** die Krümmungen oder Verläufe der mehreren Seitenabschnitte (11a, 11b, 11c, 11d, 11e) auf der Basis mindestens zweier unterschiedlich bemessener Krümmungsradien (R1-R5) gestaltet sind.

5. Auswuchtgewicht nach Anspruch 4, **dadurch gekennzeichnet, dass** ein Mittlerer (11c) der Seitenabschnitte (11a, 11b, 11c, 11d, 11e) auf der Basis des größten (R3) der Krümmungsradien (R1-R5) verläuft.

6. Auswuchtgewicht nach einem der vorangehenden Ansprüche, **dadurch gekennzeichnet, dass** wenigstens einer der Seitenabschnitte (11a, 11b, 11c, 11d, 11e), gegebenenfalls ein Mittlerer (11c), geradlinig beziehungsweise auf der Basis eines unendlich langen Krümmungsradiuses verläuft.

7. Auswuchtgewicht nach einem der Ansprüche 1 bis 5, **dadurch gekennzeichnet, dass** die Anlageseite (2) ausschließlich mit gekrümmten Seitenabschnitten (11a, 11b, 11c, 11d, 11e) auf der Basis von Krümmungsradien (R1-R5) kleiner als Unendlich gestaltet ist.

8. Auswuchtgewicht nach einem der vorangehenden Ansprüche, **dadurch gekennzeichnet, dass** zwei äußere Seitenabschnitte (11a, 11e), weiche die beiden Enden (8) der Anlageseite (2) bilden, jeweils auf der Basis des kleinsten (R1, R5) der Krümmungsradien (R1-R5) gekrümmt sind.

9. Auswuchtgewicht nach Anspruch 8, **gekennzeichnet durch** die Verwendung mindestens dreier, ganz oder teilweise unterschiedlich großer Krümmungsradien (R1-R5) für die Gestaltung der Seitenabschnitte (11a, 11b, 11c, 11d, 11e), wobei der größte Krümmungsradius (R3) einem mittleren Seitenabschnitt (11c), und der kleinste Krümmungsradius den beiden End-Seitenabschnitten (11a, 11e) der Anlageseite (2) zugeordnet ist.

10. Auswuchtgewicht nach Anspruch 9, **gekennzeichnet durch** die Verwendung von mehr als drei, ganz oder teilweise unterschiedlich großer Krümmungsradien (R1-R5) für die Gestaltung der Seitenabschnitte (11a, 11b, 11c, 11d, 11e), wobei die betragsmäßig zwischen dem größten und kleinsten Krümmungsradius (R3, R1) liegenden Krümmungsradien (R2,R4) Seitenabschnitten (11b, 11d) zugeordnet sind, die zwischen dem mittleren (11c) und den beiden End-Seitenabschnitten (11a,11e) liegen.

**11.** Auswuchtgewicht nach einem der vorangehenden Ansprüche, **gekennzeichnet durch** mindestens drei, jeweils mit unterschiedlichen Krümmungsradien (R1-R5) aufeinander folgende Seitenabschnitte (11a, 11b, 11c, 11d, 11e).

**12.** Auswuchtgewicht nach Anspruch 1 oder 5, **dadurch gekennzeichnet, dass** die Seitenabschnitte (11a, 11b, 11c, 11d, 11e; Fig. 5) ausschließlich geradlinig sind beziehungsweise auf der Basis eines unendlich langen Krümmungsradiuses verlaufen und einen offenen eckigen Streckenzug bilden.

**13.** Auswuchtgewicht nach Anspruch 12, **dadurch gekennzeichnet, dass** gedachte Verlängerungen von Seitenabschnitten (11a, 11b, 11c, 11d, 11e) mit benachbarten Seitenabschnitten (11a, 11b, 11c, 11d, 11e) spitze Winkel ($\alpha$, $\beta$,$\gamma$,$\delta$) ergeben.

**14.** Auswuchtgewicht nach einem der Ansprüche 12 oder 13, **dadurch gekennzeichnet, dass** die spitzen Winkel ($\alpha$, $\beta$,$\gamma$,$\delta$) mit zunehmender Entfernung vom Mittelbereich (9) zunehmen und/oder in den Seitenabschnitten (11a, 11e) in den Endbereichen (8) am größten sind.

**15.** Auswuchtgewicht nach Anspruch 1, **dadurch gekennzeichnet, dass** die Krümmungen der einzelnen Seitenabschnitte (11a, 11b, 11c, 11d, 11e) nicht konstant sind und/oder dem Verlauf einer Parabel, Hyperbel und/oder Ellipse entsprechen.

**16.** Auswuchtgewicht nach einem der vorangehenden Ansprüche, **gekennzeichnet durch** insbesondere gegenüber einer gedachten Symmetrielinie paarweise gleich ausgeführte Seitenabschnitte (11a, 11e; 11b, 11d).

**17.** Auswuchtgewicht nach einem der vorangehenden Ansprüche, **dadurch gekennzeichnet, dass** das Klemmelement (6) mittig eingegossen und/oder aus Federstahl ist.

**18.** Auswuchtgewicht nach einem der vorangehenden Ansprüche, **dadurch gekennzeichnet, dass** die Knicke (12) unterschiedlich lange Abstände voneinander aufweisen.

**19.** Herstellungsverfahren zur Herstellung eines Auswuchtgewichts (1) nach einem der vorangehenden Ansprüche für Fahrzeug-Räder, mit einem Gewichtskörper (7), der eine konkav oder konvex gekrümmte Anlageseite (2) zur Anlage an einen konvex beziehungsweise konkav gekrümmten Felgenteil (3,5) des Rads, insbesondere an ein Felgenhorn (4), aufweist, wobei die Anlageseite (2) in mehrere aufeinander folgende Seitenabschnitte (11a, 11b, 11c, 11d, 11e) untergliedert wird, die durch Knicke (12) voneinander abgegrenzt sind, **dadurch gekennzeichnet, dass** in Längsrichtung des Gewichtskörpers die Anlageseite mit einer Anzahl n = 3, 4, 5, ... aufeinander folgender Seitenabschnitte (11a, 11b, 11c, 11d, 11e) gestaltet wird, die jeweils mit unterschiedlichen Krümmungsradien (R1-R5) aufeinander folgen.

**20.** Herstellungsverfahren nach Anspruch 19, **dadurch gekennzeichnet, dass** die zugehörigen Krümmungsradien R1, R2, ..., Rn jeweils konstant sind und gemäß nachfolgenden Regeln bemessen werden:

a) der erste Krümmungsradius R1 liegt am linken (oder rechten) Ende der Anlageseite und der letzte Krümmungsradius Rn am rechten (oder linken) Ende des Anlageseite;
b) u < R1, Rn < o, wobei u ein unteres und o ein oberes Maß für den Krümmungsradius ist;
c) mit folgender Fallunterscheidung:

Fall A: n ist geradzahlig und beträgt mindestens 4 : n = 4, 6, 8, ... usw.
u<R1<o
R2>R1
R3 >= R2
R4 >= R3
R5 >= R4
...
R(n/2) >= R(n/2-1)
R(n/2+1) <= R(n/2)
R(n/2+2) <= R(n/2+1)
...

$$R(n-1) \le R(n-2)$$
$$Rn < R(n-1)$$
$$u < Rn < o$$

Fall B: n ist ungeradzahlig und beträgt mindestens 3: n = 3, 5, 7, ...usw.

$$u < R1 < o$$
$$R2 > R1$$
$$R3 \ge R2$$
$$R4 \ge R3$$
$$R5 \ge R4$$
...
$$R((n+1)/2) \ge R((n+1)/2-1)$$
$$R((n+1)/2+1) \le R((n+1)/2)$$
$$R((n+1)/2+2) \le R((n+1)/2+1)$$
...
$$R(n-1) \le R(n-2)$$
$$Rn < R(n-1)$$
$$u < Rn < o$$

21. Herstellungsverfahren nach Anspruch 20, **dadurch gekennzeichnet, dass** der Krümmungsradius mindestens u = 120 mm und höchsten o = 600 mm beträgt.

22. Herstellungsverfahren nach einem der vorangehenden Ansprüche, **dadurch gekennzeichnet, dass** wenigstens einer der Krümmungsradien (R1-R5), vorzugsweise ein einem mittleren Seitenabschnitt (11c) zugeordneter, mit einem gegen unendlich gehenden Betrag dimensioniert wird.

23. Herstellungsverfahren nach einem der vorangehenden Ansprüche, **dadurch gekennzeichnet, dass** wenigstens einer der Seitenabschnitte (11a, 11b, 11c, 11d, 11e), insbesondere ein Mittlerer (11c), mit einer Bogen- oder Linear-Länge von etwa 40 mm bis 60 mm dimensioniert wird.

**Claims**

1. A balancing weight (1) for vehicle wheels comprising a weight body (7) which has a concavely or convexly curved contact face (2) for contact with a convexly or concavely curved rim portion (3, 5) of the wheel, and comprising a clamping element (6) for fastening the weight body to the rim portion so that it is integrated into the structure or is provided subsequently with a holding spring, the contact face (2) being divided into a number of consecutive lateral sections (11 a, 11 b, 11c, 11 d, 11e) defined from one another by bends (12), **characterised in that** at least three lateral sections (11 a, 11 b, 11c, 11 d, 11e) are formed for contact with the rim portion and are respectively joined together in a row in the longitudinal direction of the weight body (7) via obtuse-angled bends (12).

2. The balancing weight according to Claim 1, **characterised by** the production of the weight body (7) from or with zinc, steel, copper, brass, tungsten, gold, silver and/or an alloy comprising one or more of said materials, or another material or alloy, which are respectively harder than lead, including glass.

3. The balancing weight according to Claim 1 or 2, **characterised in that** one, a number of or all of the lateral sections (11a, 11 b, 11c, 11 d, 11e) extend along circular curves or with respectively constant curvatures.

4. The balancing weight according to Claim 1, 2 or 3, **characterised in that** the curvatures or extensions of the number of lateral sections (11a, 11 b, 11c, 11 d, 11e) are formed on the basis of at least two differently dimensioned radii of curvature (R1-R5).

5. The balancing weight according to Claim 4, **characterised in that** a central one (11c) of the lateral sections (11 a, 11 b, 11c, 11d, 11e) extends on the basis of the largest (R3) of the radii of curvature (R1-R5).

6. The balancing weight according to any of the preceding claims, **characterised in that** at least one of the lateral sections (11 a, 11b, 11 c, 11d, 11e), if so required a central one (11c), extends rectilinearly or on the basis of an infinitely long radius of curvature.

7. The balancing weight according to any of Claims 1 to 5, **characterised in that** the contact face (2) is formed exclusively with curved lateral sections (11 a, 11 b, 11c, 11 d, 11e) on the basis of radii of curvature (R1-R5) which are smaller than infinite.

8. The balancing weight according to any of the preceding claims, **characterised in that** two outer lateral sections (11a, 11e) which form the two ends (8) of the contact face (2) are respectively curved on the basis of the smallest (R1, R5) of the radii of curvature (R1-R5).

9. The balancing weight according to Claim 8, **characterised by** the use of at least three entirely or partially differently sized radii of curvature (R1-R5) for shaping the lateral sections (11a, 11 b, 11c, 11 d, 11e), the largest radius of curvature (R3) being assigned to a central lateral section (11c), and the smallest radius of curvature being assigned to the two end lateral sections (11a, 11e) of the contact face (2).

10. The balancing weight according to Claim 9, **characterised by** the use of more than three entirely or partially differently sized radii of curvature (R1-R5) for shaping the lateral sections (11a, 11b, 11c, 11d, 11e), the radii of curvature (R2, R4) lying between the largest and smallest radius of curvature (R3, R1) in size being assigned to lateral sections (11 b, 11 d) which lie between the central (11 c) and the two end lateral sections (11a, 11e).

11. The balancing weight according to any of the preceding claims, **characterised by** at least three lateral sections (11 a, 11 b, 11c, 11 d, 11e) respectively following one another with different radii of curvature (R1-R5).

12. The balancing weight according to Claim 1 or 5, **characterised in that** the lateral sections (11 a, 11b, 11c, 11 d, 11e; Fig. 5) are exclusively rectilinear or extend on the basis of an infinitely long radius of curvature and form an open rectangular section.

13. The balancing weight according to Claim 12, **characterised in that** hypothetical extensions of lateral sections (11a, 11 b, 11 c, 11 d, 11 e) form acute angles ($\alpha$, $\beta$, $\gamma$, $\delta$) with adjacent lateral sections (11a, 11b, 11c, 11d, 11e).

14. The balancing weight according to either of Claims 12 or 13, **characterised in that** the acute angles ($\alpha$, $\beta$, $\gamma$, $\delta$) increase as the distance from the central region (9) increases and/or are largest in the lateral sections (11a, 11e) in the end regions (8).

15. The balancing weight according to Claim 1, **characterised in that** the curvatures of the individual lateral sections (11a, 11b, 11c, 11d, 11e) are not constant and/or do not correspond to the progression of a parabola, hyperbola and/or an ellipse.

16. The balancing weight according to any of the preceding claims, **characterised by** identically formed lateral sections (11a, 11e; 11 b, 11 d) formed in pairs in particular with respect to a hypothetical line of symmetry.

17. The balancing weight according to any of the preceding claims, **characterised in that** the centre of the clamping element (6) is cast and/or made of spring steel.

18. The balancing weight according to any of the preceding claims, **characterised in that** the bends (12) have different distances from one another.

19. A production method for producing a balancing weight (1) according to any of the preceding claims for vehicle wheels, comprising a weight body (7) which has a concavely or convexly curved contact face (2) for contact with a convexly or concavely curved rim portion (3, 5) of the wheel, in particular a rim flange (4), the contact face (2) being divided into a number of consecutive lateral sections (11 a, 11 b, 11c, 11 d, 11e) which are defined with respect to one another by bends (12), **characterised in that** in the longitudinal direction of the weight body the contact face is formed with a number n = 3, 4, 5, ... of consecutive lateral sections (11a, 11 b, 11c, 11 d, 11e) which follow one another respectively with different radii of curvature (R1-R5).

20. The production method according to Claim 19, **characterised in that** the associated radii of curvature R1, R2, ..., Rn are respectively constant and are dimensioned according to the following rules:

   a) the first radius of curvature lies on the left-hand (or right-hand) end of the contact face and the last radius of curvature Rn on the right-hand (or left-hand) end of the contact face;

b) u < R1, Rn < o, u being a lower and o an upper measure for the radius of curvature;

c) with the following case distinction:

Case A: n is an even number and is at least 4 : n = 4, 6, 8, ... etc.

u<R1 <o

R2>R1

R3 > = R2

R4>=R3

R5>=R4

...

R(n/2) > = R(n/2-1)

R(n/2+1) < = R(n/2)

R(n/2+2) < = R(n/2+1)

...

R(n-1) < = R(n-2)

Rn < R(n-1)

u<Rn<o

Case B: n is an odd number and is at least 3: n = 3, 5, 7, ... etc.

u<R1<o

R2>R1

R3>=R2

R4>=R3

R5>=R4

...

R((n+1)/2) > = R((n+1)/2-1)

R((n+1)/2+1) < = R((n+1)/2)

R((n+1)/2+2) < = R((n+1)/2+1)

...

R(n-1) < = R(n-2)

Rn < R(n-1)

u<Rn<o

**21.** The production method according to Claim 20, **characterised in that** the radius of curvature is at least u = 120 mm and at most o = 600 mm.

**22.** The production method according to any of the preceding claims, **characterised in that** at least one of the radii of curvature (R1-R5), preferably one assigned to a central lateral section (11 c), is dimensioned with an amount going towards infinity.

**23.** The production method according to any of the preceding claims, **characterised in that** at least one of the lateral sections (11a, 11b, 11c, 11d, 11e), in particular a central one (11c), is dimensioned with a curve or linear length of approximately 40 mm to 60 mm.

**Revendications**

**1.** Masselotte d'équilibrage (1) pour roues de véhicules, comprenant un corps pondéral (7), qui présente une face d'appui (2) à courbure concave ou convexe pour s'appliquer sur une partie de jante (3, 5) de la roue à courbure convexe ou concave et est intégré structurellement avec un élément de serrage (6) pour fixer le corps pondéral à la partie de jante ou est pourvu après coup d'un ressort de maintien, dans laquelle la face d'appui (2) est subdivisée en plusieurs sections de face successives (11a, 11b, 11c, 11d, 11e) qui sont séparées l'une de l'autre par des brisures (12), **caractérisée en ce qu'**au moins trois sections de face (11a, 11b, 11c, 11d, 11e) sont conformées pour s'appuyer sur la partie de jante et sont alignées l'une l'autre dans la direction longitudinale du corps pondéral (7) via des brisures (12) à angle obtus.

**2.** Masselotte d'équilibrage selon la revendication 1, **caractérisée par** une production du corps pondéral (7) à partir de zinc, d'acier, de cuivre, de laiton, de tungstène, d'or, d'argent et/ou d'un alliage avec un ou plusieurs des matériaux précités ou un autre matériau ou un autre alliage qui est respectivement plus dur que le plomb, notamment du verre.

**3.** Masselotte d'équilibrage selon la revendication 1 ou 2, **caractérisée en ce qu'**une, plusieurs ou la totalité des sections de face (11a, 11b, 11c, 11d, 11e) s'étend ou s'étendent selon des courbes circulaires ou avec des courbures respectivement constantes.

**4.** Masselotte d'équilibrage selon la revendication 1, 2 ou 3, **caractérisée en ce que** les courbures ou les extensions des multiples sections de face (11a, 11b, 11c, 11d, 11e) se présentent sur la base d'au moins deux rayons de courbure de dimensions différentes.

**5.** Masselotte d'équilibrage selon la revendication 4, **caractérisée en ce qu'**une moyenne (11c) des sections de face (11a, 11b, 11c, 11d, 11e) s'étend sur la base du plus grand (R3) des rayons de courbure (R1-R5).

**6.** Masselotte d'équilibrage selon l'une quelconque des revendications précédentes, **caractérisée en ce qu'**au moins l'une des sections de face (11a, 11b, 11c, 11d, 11e), éventuellement une moyenne (11c), s'étend en ligne droite ou sur la base d'un rayon de courbure infiniment long.

**7.** Masselotte d'équilibrage selon l'une quelconque des revendications 1 à 5, **caractérisée en ce que** la face d'appui (2) présente exclusivement des sections de face incurvées (11a, 11b, 11c, 11d, 11e) sur la base de rayons de courbure (R1-R5) plus petits que l'infini.

**8.** Masselotte d'équilibrage selon l'une quelconque des revendications précédentes, **caractérisée en ce que** deux sections de face extérieures (11a, 11e), qui forment les deux extrémités (8) de la face d'appui (2), s'incurvent respectivement sur la base du plus petit (R1, R5) des rayons de courbure (R1-R5).

**9.** Masselotte d'équilibrage selon la revendication 8, **caractérisée par** l'utilisation d'au moins trois rayons de courbure (R1-R5) en totalité ou en partie de différentes grandeurs pour l'élaboration des sections de face (11a, 11b, 11c, 11d, 11e), dans laquelle le rayon de courbure le plus grand (R3) est affecté à la section de face moyenne (11c) et le rayon de courbure le plus petit aux deux sections de face d'extrémité (11a, 11e) de la face d'appui (2).

**10.** Masselotte d'équilibrage selon la revendication 9, **caractérisée par** l'utilisation de plus de trois rayons de courbure (R1-R5) en totalité ou en partie de différentes grandeurs pour l'élaboration des sections de face (11a, 11b, 11c, 11d, 11e), dans laquelle les rayons de courbure (R2, R4) se trouvant numériquement entre le plus grand et le plus petit rayon de courbure (R3, R1) sont affectés à des sections de face (11b, 11d) qui se trouvent entre le section de face moyenne (11c) et les deux sections de face d'extrémité (11a, 11e).

**11.** Masselotte d'équilibrage selon l'une quelconque des revendications précédentes, **caractérisée par** au moins trois sections de face (11a, 11b, 11c, 11d, 11e) se suivant successivement avec différents rayons de courbure respectifs (R1-R5).

**12.** Masselotte d'équilibrage selon la revendication 1 ou 5, **caractérisée en ce que** les sections de face (11a, 11b, 11c, 11d, 11$^e$ ; Fig.5) sont exclusivement en ligne droite ou s'étendent sur la base d'un rayon de courbure infiniment long et forment un parcours d'extension angulaire ouvert.

**13.** Masselotte d'équilibrage selon la revendication 12, **caractérisée en ce que** des prolongements imaginaires de sections de face (11a, 11b, 11c, 11d, 11e) font des angles aigus $(\alpha,\beta,y,\delta)$ avec des sections de face voisines (11a, 11b, 11c, 11d, 11e).

**14.** Masselotte d'équilibrage selon l'une quelconque des revendications 12 ou 13, **caractérisée en ce que** les angles aigus $(\alpha, \beta, y, \delta)$ augmentent avec une élimination croissante de la zone centrale (9) et/ou sont les plus grands dans les zones d'extrémité (8) des sections de face (11a, 11e).

**15.** Masselotte d'équilibrage selon la revendication 1, **caractérisée en ce que** les courbures des sections de face individuelles (11a, 11b, 11c, 11d, 11e) ne sont pas constantes et/ou correspondent au tracé d'une parabole, d'une hyperbole et/ou d'une ellipse.

**16.** Masselotte d'équilibrage selon l'une quelconque des revendications précédentes, **caractérisée par** des sections de face (11a, 11e; 11b, 11d) élaborées égales par paires en particulier par rapport à une ligne de symétrie imaginaire.

**17.** Masselotte d'équilibrage selon l'une quelconque des revendications précédentes, **caractérisée en ce que** l'élément de serrage (6) est scellé au centre et/ou constitué d'acier à ressort.

**18.** Masselotte d'équilibrage selon l'une quelconque des revendications précédentes, **caractérisée en ce que** les brisures (12) présentent des espacements mutuels de différentes longueurs.

**19.** Procédé de fabrication pour la production d'une masselotte d'équilibrage (1) selon l'une quelconque des revendications précédentes pour des roues de véhicules, comprenant un corps pondéral (7) qui présente une face d'appui (2) à courbure concave ou convexe pour s'appliquer sur une partie de jante (3, 5) de la roue à courbure convexe ou concave, en particulier sur le rebord de jante (4), dans lequel la face d'appui (2) est subdivisée en plusieurs sections de face successives (11a, 11b, 11c, 11d, 11e) qui sont séparées l'une de l'autre par des brisures (12), **caractérisé en ce que**, dans la direction longitudinale du corps pondéral, la face d'appui est formée d' un nombre n = 3, 4, 5, ... de sections de face successives (11a, 11b, 11c, 11d, 11e) qui se suivent respectivement avec des rayons de courbure différents (R1-R5).

**20.** Procédé de fabrication selon la revendication 19, **caractérisé en ce que** les rayons de courbures pertinents R1, R2, ..., Rn sont respectivement constants et sont dimensionnés selon les règles suivante :

> a) le premier rayon de courbure R1 se trouve à l'extrémité gauche (ou droite) de la face d'appui et le dernier rayon de courbure Rn à l'extrémité droite (ou gauche) de la face d'appui ;
> b) $u < R1$, $Rn < o$, où $u$ est une dimension inférieure et $o$ une dimension supérieure pour les rayons de courbure ;
> c) avec la différenciation suivante entre les cas :

> Cas A : n est un nombre pair et atteint au moins 4 : n = 4, 6, 8, etc.
> $u < R1 < o$
> $R2 > R1$
> $R3 >= R2$
> $R4 >= R3$
> $R5 >= R4$
> ...
> $R(n/2) >= R(n/2-1)$
> $R(n/2+1) <= R(n/2)$
> $R(n/2+2) <= R(n/2+1)$
> ...
> $R(n-1) <= R(n-2)$
> $Rn < R(n-1)$
> $u < Rn < o$
> Cas B : n est un nombre impair et atteint au moins 3 : n = 3, 5, 7, etc.
> $u < R1 < o$
> $R2 > R1$
> $R3 >= R2$
> $R4 >= R3$
> $R5 >= R4$
> ...
> $R((n+1)/2) >= R((n+1)/2-1)$
> $R((n+1)/2+1) <= R((n+1)/2)$
> $R((n+1)/2+2) <= R((n+1)/2+1)$
> ...
> $R(n-1) <= R(n-2)$
> $Rn < R(n-1)$
> $u < Rn < o$.

**21.** Procédé de fabrication selon la revendication 20, **caractérisé en ce que** le rayon de courbure atteint au moins u = 120 mm et au maximum o = 600 mm.

**22.** Procédé de fabrication selon l'une quelconque des revendications précédentes, **caractérisé en ce qu'**au moins l'un des rayons de courbure (R1-R5), de préférence l'un affecté à une section de face centrale (11c), est dimensionné avec un chiffre allant vers l'infini.

**23.** Procédé de fabrication selon l'une quelconque des revendications précédentes, **caractérisé en ce qu'**au moins l'une des sections de face (11a, 11b, 11c, 11d, 11e), en particulier une moyenne (11c), est dimensionnée avec une longueur d'arc ou une longueur linéaire d'environ 40 mm à 60 mm.

Fig.1

EP 1 613 876 B1

Fig.2

EP 1 613 876 B1

Fig.3

EP 1 613 876 B1

Fig.4a

Fig.4b

Fig.4c

Fig.4d

Fig. 5

**IN DER BESCHREIBUNG AUFGEFÜHRTE DOKUMENTE**

**In der Beschreibung aufgeführte Patentdokumente**

- DE 10102321 A1

- WO 9900609 A